# EUROPEAN PATENT APPLICATION

(11) **EP 2 983 387 A1**
(43) Date of publication of application: **10.02.2016**
(21) Application number: 14306256.0
(22) Date of filing: 07.08.2014
(51) Int. Cl.: H04W 8/00, H04W 48/08, H04W 72/04, H04W 76/02

(54) **Facilitating direct user equipment to user equipment transmission**

(71) Applicant: ALCATEL LUCENT, 92100 Boulogne-Billancourt (FR)
(72) Inventor: Lim, Seau Sian, Swindon, Wiltshire SN5 7DJ (GB); Palat, Sudeep, Swindon, Wiltshire SN5 7DJ (GB); Puddle, Nicola, Swindon, Wiltshire SN5 7DJ (GB)
(74) Representative: Mills, Julia

(57) **Abstract**

A method, user equipment and network node for facilitating direct user equipment to user equipment transmission within a wireless communication network comprising a plurality of radio cells. The method comprising: determining at the user equipment a plurality of resources provided by a plurality of the radio cells for transmission of a discovery signal by a user equipment indicating its presence; and during a user equipment discovery process, the user equipment switching between at least some of the plurality of resources such that user equipment in different radio cells can detect discovery signals from each other.

## Description

### FIELD OF THE INVENTION

The present invention relates to a method, computer program, user equipment and network node for facilitating direct transmission between user equipment in proximity to each other.

### BACKGROUND

In some situations it maybe desirable for user equipment (UE) that are located in proximity to each other to transmit information directly to each other rather than via the network nodes of a wireless communication network, such as an LTE (long term evolution) network, that is a network operating under the LTE standard. User equipment should therefore be able to discover devices in proximity to them to allow the direct transmission of data.

There are two main approaches the "I am here" approach where the UE advertises itself to other UEs in the vicinity and the "who are there" approach where a UE that wants to find out who is out there will broadcast to other UEs in close proximity. Such schemes can be targeted or non-targeted, in the targeted case the message will indicate what is of interest to the UE and only those related to the interest will respond. In the non-targeted case all UEs in proximity will respond.

Regardless of the scheme the messages need to be sent repeatedly and be detected by other devices having different capabilities.

A problem arises where there are a plurality of different cells in an area with the UEs being spread between the radio cells to balance the load. Cells operate at different frequencies to reduce interference and thus, a UE operating in one cell may not easily detect a UE operating in another cell.

It would be desirable to be able to discover UEs in proximity to each other whatever cell they are operating in.

### SUMMARY

A first aspect of the present invention provides a method of facilitating direct user equipment to user equipment transmission within a wireless communication network comprising a plurality of radio cells, said method being performed at a user equipment and comprising: determining at said user equipment a plurality of resources provided by a plurality of said radio cells for transmission of a discovery signal by a user equipment indicating its presence; during a user equipment discovery process, said user equipment switching between at least some of said plurality of resources such that user equipment in different radio cells can detect discovery signals from each other.

The present invention recognises that user equipment that are in proximity with each other within a wireless communication network may be communicating with different radio cells operating at different carrier frequencies. In this regard they may be connected to a particular radio cell or may be in idle node but camped in a particular radio cell. Where resources are available for direct user equipment to user equipment D2D discovery and communication these resources may depend on the radio cell that provides them. Thus, a user equipment in one radio cell will be allocated different resources for transmitting a discovery signal than a user equipment in a different cell. In order to be able to discover user equipment in different cells the resources that are used for such signals need to be known so that the user equipment in the different cells can detect each other. The present invention addresses this problem by a user equipment determining not just the resources provided for transmitting discovery signals provided by the radio cell it is communicating with but also those provided by at least one other radio cell. The user equipment can then switch between the resources which allows user equipment in different cells to detect discovery signals from each other.

In some embodiments the switching between the resources is done by a user equipment receiving or scanning for the discovery signals while in others it may be done by the user equipment transmitting the discovery signal. Provided that at least one of the transmitting UE or the receiving UE switches between resources then the discovery signal will be detectable by the other UE.

The resources maybe those that are available for use for transmitting a discovery signal where the radio cell has a pool of such resources or they may be resources that are allocated to a user equipment for transmitting discovery signals where the radio cell is of the type that allocates resources to user equipment on request.

In some embodiments, said resource comprises at least one of a carrier frequency and a time period.

In this regard, the resource may be a carrier frequency that a particular radio cell transmits on and it may further comprise a time period or plurality of time periods within which this frequency is used for discovery signal transmission.

In some embodiments, upon determining the plurality of resources, the user equipment will prioritise them. In this regard, the information that is received regarding the resources may simply identify the resources or it may have further information regarding the type of D2D transmission that a discovery signal on such a resource should relate to. This further information may be used by the user equipment to prioritise those resources that are of most relevance to the user equipment. The user equipment may then switch to only higher priority resources and/ or it may order its switching such that the higher priority resources are switched to first. Even if the information is simply identifying the resource then this too may be used to prioritise it as in some cases as there maybe some scheme in place, such that certain resources are used in preference to others on certain occasions allowing a user equipment to determine a priority even without additional information.

In some embodiments said user equipment has a single receiver and a single transmitter and when performing said switching between said resources, said user equipment is operable to autonomously prioritise a carrier frequency of said radio cell providing said resource.

In the case that the user equipment has more than one transmitter or receiver, for example when it supports carry aggregation, then it can simply scan for or transmit on resources of different radio cells while remaining camped on or connected to the original cell. Where it has only a single transmitter and/or receiver then in some embodiments, it can autonomously prioritise a frequency of the radio cell of the resource it wishes to switch to.

In some embodiments said method comprising prioritising said plurality of resources and switching between said plurality of resources until all of said resources above a predetermined priority have been switched to.

When the user equipment has received information regarding the plurality of resources, then it will switch between them either scanning each of them or transmitting a discovery signal on each until all the resources have been switched between. In some cases it may prioritise the resources first and then switch between the plurality of resources in which said user equipment is interested. In this regard this may be those that have a priority high than a particular predetermined level.

In some embodiments, the method comprises repeating said switching step periodically.

The switching between resources may be repeated periodically. In this regard whether the user equipment is transmitting discovery signals on different resources or scanning the different resources for discovery signals, this consumes battery energy and as such the user equipment should perform this discovery process periodically with periods where no discovery process is performed.

In some embodiments, said switching between resources comprises: indicating to a radio cell that said user equipment is in communication with, an interest in at least one of said plurality of resources provided by a further radio cell; and connecting to said further radio cell.

Where the resources are allocated to a user equipment by the network, then the user equipment needs to connect to a radio cell to request allocation of such a resource. In order to do this it needs to notify the radio cell it is communicating with the resource of interest to it, such that this radio cell can prioritise the cell providing the resource for a subsequent handover.

In some embodiments said information further comprises interest grouping information indicating resources used for discovery signals transmitted by user equipment providing direct communication corresponding to a service from a predetermined group of services.

The information regarding the resources may simply identify the resource, for example the frequency or periodicity or it may comprise further information such as a group of services that might be transmitted on the resource such as public safety type transmissions or advertising.

In some embodiments, said step of determining said plurality of resources comprises receiving at said user equipment from one of said radio cells in communication with said user equipment, information indicating at least one of said resources provided by a further radio cell.

One way of determining the resources provided by different cells is for the radio cells to each transmit information regarding the resources not only provided by themselves but also provided by their neighbours. Such information can be transmitted between radio cells using the backhaul link between network nodes for example. Alternatively, the radio cells may be configured with this information. In this way information regarding the different resources can be provided to a user equipment without it needing to receive a signal from a different radio cell on a different frequency. This information maybe transmitted to the user equipment in a system information block SIB or via some other control signalling such as layer one control signalling. Such layer one control signalling could be (e)PDCCH in an LTE network.

In some embodiments, the method comprises sequentially scanning for at least some of said plurality of radio cells providing at least one of said plurality of resources; and in response to detecting one of said plurality of radio cells scanning for at least one of said plurality of resources provided by said radio cell.

Where it is the receiving user equipment that is switching between resources then it may scan for radio cells providing the resources, in some cases just resources in which it is interested and on locating such a radio cell it can scan for at least one of the resources provided by that radio cell. In this regard where it has multiple receivers it may simply use one of its receivers to perform the scanning while continuing to communicate with the cellular network using the other receiver. Where it has only one receiver, then it will need to proritise the frequency of the radio cell for which it is scanning.

In some embodiments, the method comprises following said scanning step indicating to said at least one further radio cell that said scan is complete. This allows the radio cell to know that the resources that were being scanned are no longer of interest and it may use these for other purposes. It also allows the network to know that it can stop the special handling of the user and go back to its normal handling of the user. For example, it may hand the user to another cell based on load etc. which it will not be able to do while this UE needs to be on this cell to scan for Discovery signal

This is particularly relevant where the user equipment is scanning in connected mode as the radio cell that the user equipment is connected to may reserve the resource for the scanning and can release it when it receives the scan complete signal.

In some embodiments said determining step comprises: receiving information from one of said plurality of radio cells, said information indicating at least one of: a plurality of resources provided by said radio cell that are available for transmitting a discovery signal; and an indication that said radio cell is of a type where said resources are provided to a connected user equipment on request.

The radio cells maybe configured in different ways such that the resources available for transmitting discovery signals may be allocated to user equipment on request or there may be a pool of resources that are available and the pool is signalled to the user equipment. Where the radio cell is of the type where the resources are provided on request, then if transmitting the discovery signal the user equipment will connect to the radio cell and request a resource whereas where the resource is from a pool of resources, then the user equipment may simply select one of the resources and transmit the discovery signal on that resource. When scanning for discovery signals, the user equipment will scan each resource that may be of interest to it from any pool of resources and where the cells allocate resources the user equipment will determine from these cells which resources have been or are likely to be allocated and will scan those of interest.

In some embodiments, said step of switching between at least some of said plurality of resources comprises: transmitting said discovery signal on a resource provided by one of said plurality of radio cells; and transmitting a discovery signal on a resource provided by a further one of said plurality of radio cells.

One solution to the problem of there being multiple resources available for the transmission of discovery signals for device to device communication is for the user equipment that is transmitting the discovery signal to transmit the discovery on more than one resource provided by more than one radio cell. In this regard it will switch between cells and transmit the discovery signal on the resources of the different cells at different times. The discovery signal may be the same signal on each resource it may be a different signal. In this way, user equipment in a different radio cell that are monitoring the discovery signals will be able to detect the transmitting user equipment and the discovery of user equipment will not be limited to those within the same radio cell.

It should be appreciated that it maybe appropriate for some user equipment to scan a plurality of resources and some user equipment to transmit on a plurality of resources or in other cases, it maybe appropriate for a user equipment to simply scan one resource and for transmitting user equipment to transmit on a plurality of resources or for transmitting user equipment to transmit on just one resource and the scanning user equipment to scan the plurality of resources.

A second aspect of the present invention provides a method performed at a network node supporting a radio cell within a wireless communication network comprising: transmitting information towards a user equipment within said radio cell, said information comprising information indicating at least one resource provided by at least one further radio cell for transmission of a discovery signal by a user equipment indicating its presence.

A wireless communication network that supports direct user equipment to user equipment transmission and wishes to allow the discovery of user equipment within different radio cells may transmit information regarding the resources that it has available and the resources of other radio cells for transmission of discovery signals to user equipment allowing them to be aware of resources provided by other radio cells at different carrier frequencies.

The information may be transmitted to the user equipment in several ways including within a system information block and/or as part of a layer on control signalling such as a physical downlink control channel (E)PDCCH.

In some embodiments, the method further comprises transmitting information to said at least one further radio cell indicating at least one resource provided by said radio cell supported by said network node for use by user equipment for transmitting said discovery signal.

The information regarding the resources of the other radio cells may be transmitted between them on the backhaul link or they may be configured with this information.

In some embodiments, the method further comprises receiving from a user equipment connected to said radio cell an indication of at least one of said at least one resources that said user equipment is interested in; and initiating a handover to said at least one further radio cell supporting said resource of interest. In some cases an indication may also be provided to said at least one further radio cell that said handover is due to interest in direct user equipment to user equipment communication.

In some cases, the network node may receive an indication from a connected user equipment of a resource that the user equipment is interested in. The network node can then initiate a handover to the radio cell that provides that resource by prioritising this radio cell and it may indicate at this point that the handover is due to interest in the direct user equipment to user equipment communication. This indication allows the radio cell that receives the handover request to avoid transmitting on the resource of interest for a predetermined time allowing the user equipment to scan it for discovery signals. It also allows the radio cell to know that the user requires special handling and should not be handed over to another cell while this UE needs to be on this cell to scan for Discovery signal.

A third aspect of the present invention provides a computer program operable when executed to perform a method according to a first or second aspect of the present invention.

A fourth aspect provides a user equipment configured to perform direct user equipment to user equipment communication within a wireless communication network comprising a plurality of radio cells, said user equipment comprising: determining logic for determining a plurality of resources provided by a plurality of said radio cells for transmission of a discovery signal by a user equipment indicating its presence; resource switching logic for switching between at least some of said plurality of resources during a user equipment discovery process such that user equipment in different radio cells can detect discovery signals from each other.

A fifth aspect provides a network node supporting a radio cell within a wireless communication network comprising: transmission logic operable to transmit information towards user equipment within said radio cell, said information comprising information indicating at least one resource provided by at least one further radio cell for transmission of a discovery signal by a user equipment indicating its presence.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 illustrates a plurality of radio cells and user equipment according to an embodiment;
Figure 2 illustrates a flow diagram showing in steps in a method performed by a user equipment in idle mode scanning for discovery signals indicating user equipment wishing to perform D2D communication;
Figure 3 shows a flow diagram showing steps in a method performed at a network node for providing resource information regarding resources available for transmitting discovery signals; and
Figure 4 shows steps in a method performed by a user equipment transmitting discovery signals sequentially on a plurality of resources.

### DESCRIPTION OF THE EMBODIMENTS

Before discussing the embodiments in any more detail, first an overview will be provided.

Embodiments of the invention seek to devise feasible methods for D2D discovery and D2D communications for both public safety and non-public safety scenarios, in particular D2D discovery/ProSE (Proximity Services). With regard to non-public safety scenarios, various different reasons for such communication are envisaged such as a user equipment within a shop, for example, transmitting a direct advertising communication to user equipment that it has detected are nearby encouraging their owners to visit the shop.

Challenges arise where UEs have different D2D reception and transmission capabilities. Resources are allocated to the UEs for the transmission of discovery signals and other UEs need to be aware of these resources so that they can scan for these signals. Two types of resource allocation schemes have been defined, namely Type 1 and Type 2. Type 1 resource allocation for a transmit UE allows the UE to autonomously select its transmission resources from a resource pool provided by the network. For type 2 resource allocation the transmit UE requests transmission resources from the network and the network provides resources per transmission or series of transmissions. From a reception UE point of view, it is informed of the resource pool or the resources allocated for reception/ monitoring by the network.

A UE may not be able to receive simultaneously on the downlink DL and uplink UL spectrum of FDD (frequency division duplex) carriers supporting D2D. This implies that the UE may also not be able to receive multiple UL spectrums at the same time (i.e. a single receiver UE needs to be supported for D2D discovery). Furthermore TDM (time division multiplexing) needs to be performed between cellular reception and D2D reception.

This may not be an issue if the operator operates only on 1 frequency with D2D on that frequency. However, it is likely that operators may operate in multiple frequencies and may configure more than 1 frequency for D2D discovery to spread out the D2D load over multiple frequencies. Even if a UE can receive simultaneously on the DL and UL spectrum of FDD carriers, it may still not be able to receive simultaneous UL spectrums of the FDD carriers for D2D and would require the receiver to support D2D reception. Furthermore, the TX (transmit) UE may also only be able to transmit in 1 frequency at one time. Hence a problem of how such receive UE and transmit UEs that may operate on many different frequencies are to discover each other.

There may also be a need for a UE to transmit in one D2D frequency, as well as receive in another D2D frequency and one frequency may have a high priority i.e one of the D2D frequencies maybe for public safety.

A method of facilitating direct user equipment to user equipment transmission between user equipment within a wireless communication network comprising a plurality of radio cells is provided. The method comprises: determining at a user equipment information indicating at least one resource supported by one radio cell and at least one further resource supported by a further radio cell, said resources being resources that are operable for transmitting a discovery signal indicating a user equipment's presence. By providing information to the user equipment regarding the resources that are available in different radio cells for transmitting discovery signals the UEs are aware of the different resources. This allows them in some cases to transmit on each in turn, allowing a receiving UE monitoring one of the resources to discover the transmitting UE. Alternatively or additionally a receiving UE may monitor each of the resources in turn allowing it to discover a transmitting UE, even if the transmitting UE is only transmitting on one of the frequencies. The discovery signals may simply advertise the UE's presence or they may contain further information such as advertising information destined for the UE receiving the discovery signal. In this way the discovery signal can be used as a way of transmitting information directly to another user equipment.

Methods of single/ multiple transmit UE discovering single receive UE while maintaining service coverage of the cellular network are described. One method is that the receive UE hops from 1 D2D frequency to another after receiving all the discovery signals within the D2D frequency until all the possible D2D frequencies are scanned for discovery signals. The TX UE will transmit its discovery signal in the cell it is camped in that supports D2D discovery transmission. Another method is that the transmit UE hops from 1 D2D frequency to another after transmitting the discovery signal(s) within the frequency once or for a period of time before hopping to another D2D frequency. The RX UE stays in a cell that supports D2D discovery reception. In the following, each of the method is further described in the following pages.

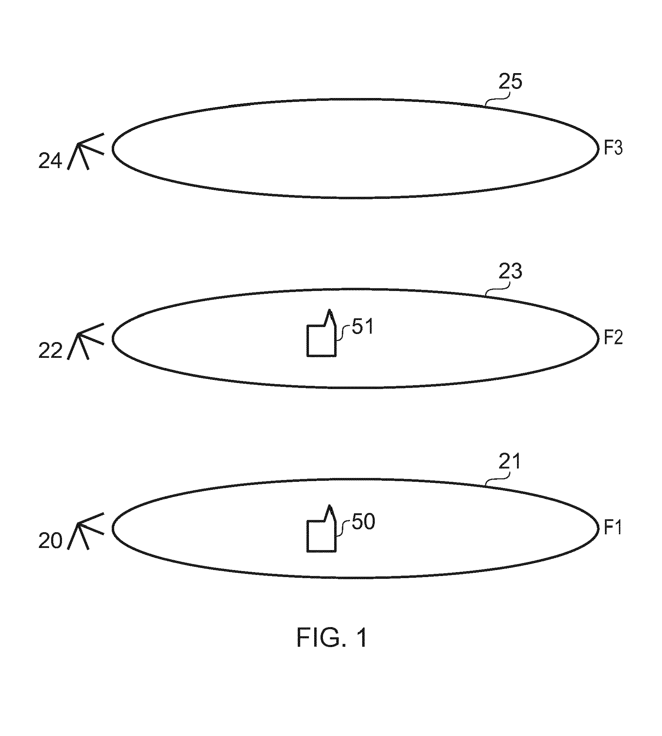

Figure 1 schematically shows a plurality of radio cells 21, 23, 25 which are in proximity to each other, they may be overlapping, one within another or simply close by. These radio cells support radio communication for user equipment 50, 52 located within them. The radio cells are provided by network nodes 20, 22 and 24 in these embodiments. In this regard, a network node may provide a single radio cell or it may provide several.

In this embodiment, radio cell 21 provides resources at frequency f1 while radio cell 23 provides resources at frequency f2 and radio cell 25 provides resources at frequency f3. Radio cell 21 transmits a system information block SIB providing information for user equipment 50 within the cell. This information includes information regarding the radio cell 21 and the resources that it has available for transmitting user equipment to user equipment discovery signals and it also contains information regarding resources that are available in radio cell 23 and radio cell 25 for transmitting such discovery signals. Thus, user equipment 50 within radio cell 21 receives information regarding the frequency f2 of radio cell 23 and the frequency f3 of radio cell 25. It also receives information regarding the type of D2D communication service provided by a particular resource within cell 23. Cell 23 is a type 1 cell with a pool of resources for discovery signals, in this case some of the resources are reserved for public safety communications while others are reserved for advertising. This information allows the user equipment to determine which resources maybe of interest to it and allows it to prioritise the resources that it scans. In this regard, radio cell 25 does not provide any information regarding the type of resource but simply indicates the resources that are available for discovery signals.

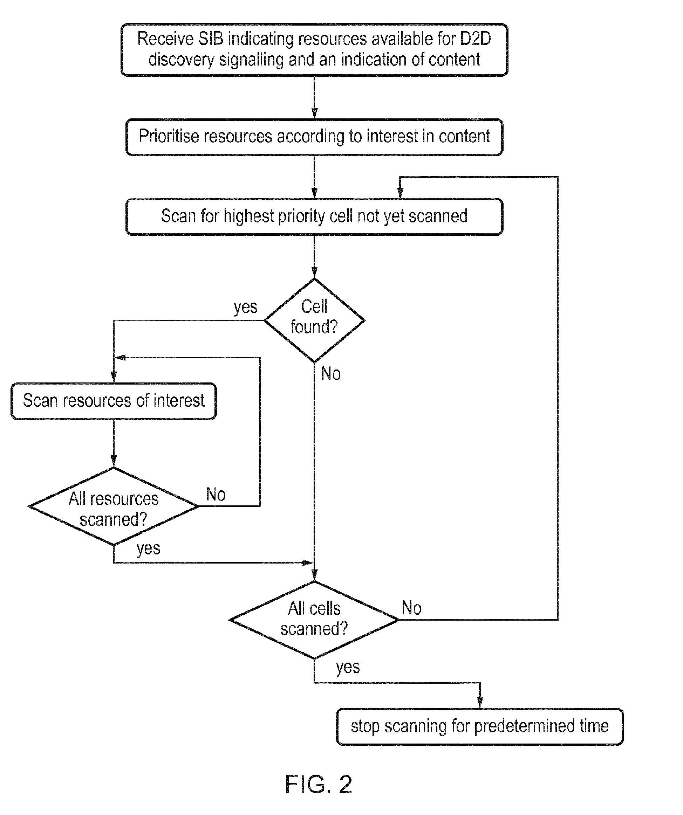

Figure 2 shows steps in a method performed by a user equipment in idle mode when scanning for other user equipment. As the user equipment is in idle mode it receives system information blocks periodically from the cell in which it is camping. These system information blocks will indicate resources available for discovery signaling within the cell itself and within cells in proximity to it and will also in some cases provide some indication of the type of discovery signaling provided.

The UE then prioritises the resources perhaps according to its interest in the type of transmission and then scans for the highest priority cell from the cells of interest. In this regard the prioritization of the scan may be based on the resources that the UE is interested in or it may simply be an autonomous prioritization based on the carrier frequency of the cell. If the cell is found, it will then scan the resources of interest to it provided by that cell. In this regard the initial indication of resource received from the SIB might simply have indicated the cell and further information regarding the resources used by the cell for discovery signaling may need to be obtained from this cell prior to scanning for them, alternatively this information may have been provided in the initial step.

The UE will scan each resource of interest for a predetermined time and determine whether a discovery signal is detected. If no discovery signal is detected and the time for scanning has expired, it will then scan the next resource until all resources have been scanned. Once they have all been scanned the UE will determine if all the cells have been scanned, if they haven't it will scan for the next highest priority cell. When scanning for a cell, where the UE has more than one receiver it will use one of the receivers to scan for the carrier frequency of the cell while remaining camped in its original cell. Where it has only one receiver then it will autonomously prioritise the frequency of the cell for which it is scanning and use the single receiver to scan for this cell.

When scanning is complete then the user equipment will stop scanning for a predetermined time in order to preserve battery life.

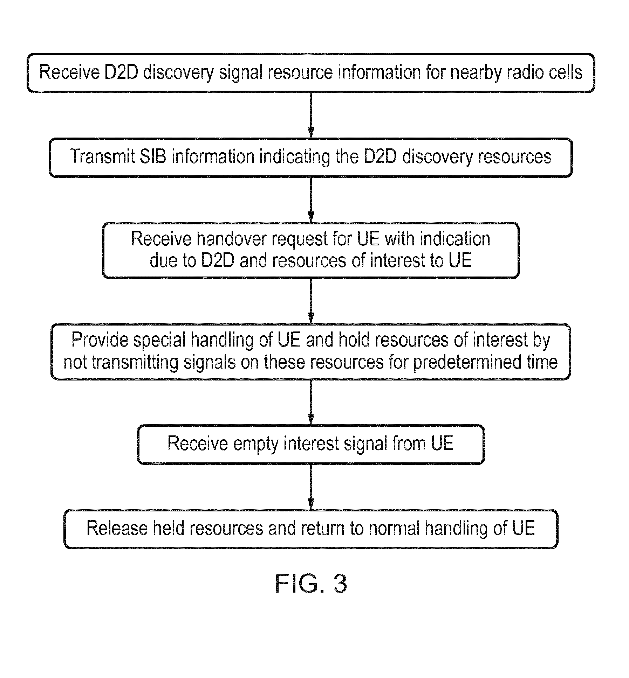

Figure 3 shows steps in a method performed at a network node. The network node receives D2D discovery signal resource information for radio cells in proximity to it. In this regard, it also transmits signal resource information to these cells such that they each have each other's D2D discovery signal resource information.

It then transmits a system information block information indicating the D2D discovery resources of its cell and of other radio cells in proximity to it to the UEs either connected or camped in the cell. The UEs are thus made aware of the resources there are in the proximity that can be scanned if other user equipment are to be discovered.

The network node may also receive a handover request from another network node for a user equipment along with an indication that this handover request is due to D2D communication. It may also receive information of resources of interest to that user equipment. In response to this it treats the user equipment in a particular way and prevents hand over to another cell while the user equipment needs to scan for a discovery signal. It also holds these resources of interest and does not transmit signals on these resources for a predetermined time, giving the UE time to scan them for other UE discovery signals. If within this predetermined time it receives an empty interest signal from the UE indicating that it has finished scanning the resource, it will release the held resource(s) and stop the special handling of the user. This allows the user to be handed over to another cell based on load etc and for the cell to go back to the network's cellular preference such as setup of the UL Scell if required.

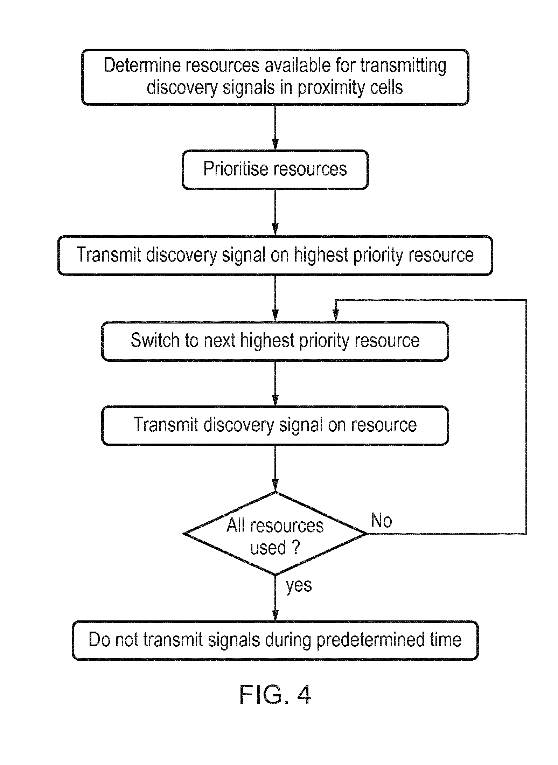

Figure 4 shows steps in a method of transmitting discovery signals across multiple resources within a wireless communication network. Initially the user equipment determines the resources that are available for transmitting discovery signals in the radio cells in proximity to it. In this regard it will determine which cells provide resource for discovery signals and whether they are type 1 or type 2 cells. Where they are type 1 cells the UE can determine the resources available from that cell from the SIB of that cell or in some embodiments from the SIB of the cell to which it currently connected or camped in. Where they are type 2 cells it will need to connect to the cell and request a resource for transmitting a discovery signal.

It can then prioritise these resources and can transmit discovery signals on these resources sequentially starting with the highest priority resources. Once it has done this, it may then stop transmitting discovery signals during a pre-determined time to conserve battery life.

As noted above the resources that are available for transmitting discovery signals may be resources from a pool if the radio cell is of the type 1 cell or it may be that they are allocated to the user equipment on request if the radio cell is of a type 2. If it is of a type 2, then the transmit user equipment needs to connect to the cell and request one of the resources for transmission, while if it is of the type 1 then the user equipment would either need to autonomously prioritise the frequency of that radio cell where it has only a single transmitter and thus, does not support carrier aggregation or use a second transmitter and transmit the signal on the resources indicated within the resource pool.

The different modes of receiving and transmitting are given in detail below.

### A. Receive UE hops from 1 D2D frequency to another

### Idle Mode UE

1. UE receives from the SIB the frequencies with D2D discovery signalling. The frequency containing D2D discovery signalling can be fixed by the operator or can be dynamic if exchanged over X2 interface (between 2 base stations or via radio network controllers). The SIB can provide further assistance information such as some hints (possible contents or grouping of the contents) of the discovery signalling per frequency. This may help the UE prioritise which frequencies to hop to. Such SIB signalling is provided in cells that support and maybe provided in cells that do not support D2D discovery
2. UE will prioritise one of the frequencies indicated in the SIB in which it wishes to receive discovery signalling and if the UE did not detect any cell of that frequency for a configurable/fixed/ specified time, it scans for a cell in the next frequency where there may be such signalling. The timing of the scan can be the same as idle mode RRM (radio resource management) measurements.
3. Once it detected a cell of a frequency listed in the SIB, it will scan for discovery signals based on the D2D configuration of the cell (e.g. Received resource pool of the discovery signal) via the SIB. If the cell requires the UE to be in connected mode to receive discovery signal, the D2D configuration is provided via dedicated signalling. Once it has scanned all the possible discovery periodicities for discovery signal, it will repeat Step 2 until all the frequencies listed in the SIB (from this cell are scanned).
4. If UE has scanned all the frequencies listed in the SIB, it can stop doing D2D scanning for a configurable/ specified/ implementation time for conserving UE power. After the expiry of the time, it can start scanning again based on the SIB.

### Connected Mode UE

### Method 1:

1. UE receives from the SIB or dedicated signalling the frequencies with D2D discovery (similar to the Step 1 in Idle Mode UE)
2. UE will indicate to the network interest in the frequencies in which it wishes to receive discovery signalling. The network will prioritise the frequencies listed as of interest for handover measurement and will handover to a cell in those frequencies. During handover, the source node may inform the target network that it is due to D2D reception so that a certain time is provided for the UE to scan the frequency of any discovery signal. The interest indication could be forwarded from the source to the target node as the UE but it is not essential as UE may not want to go to the same frequency for D2D discovery signal and may indicate other interested frequencies it has not yet scanned. The UE may also directly provide the interest indication to the cell after the handover.
3. After handover to the cell where D2D frequency is of interest, the UE starts scanning for all possible discovery periodicities in that frequency. Since the UE only has a single receiver, the network knowing that the UE is also performing D2D discovery reception will have to avoid those subframes that the UE is receiving D2D signal for DL cellular traffic.
4. Once it has scanned all the possible discovery periodicities for discovery signal, it will repeat step 2 (on the frequencies it wish to scan).
5. If UE has scanned all the frequencies listed in the SIB or dedicated signalling, it can stop measuring the frequencies and indicate to the network that it has no more frequencies of interest possibly by sending an empty interest. The network will release the measurement object related to those frequencies received in the previous interest.

### B. Transmit UE hops from 1 D2D frequency to another

Idle mode UE:
(1) The TX UE is DL CA (carrier aggregation) capable (but is capable with only 1 transmit)
   When a US is DL CA capable, it is assumed to be able to read SIB of another cell other than the serving cell.
(1a) In the case of Type 1 and the TX pool is sent in the SIB
   If the UE is able to read the SIB of a non-serving cell of a D2D frequency on which it needs to transmit discovery signal, the UE can use the D2D transmission pools in the SIB of the cell for D2D discovery without cell reselection to that cell. The hopping of the discovery signal transmission can be done autonomously by the UE to the frequency when it needs to send a discovery signal while continuing to camp on the current serving cell.
(2) In the case of Type 1 and the TX pool is not provided in the SIB or only Type 2 is indicated in the SIB, or if the UE is not CA capable, UE has to set the D2D frequency it wants to transmit Discovery signal highest so that it can camp on a cell of that frequency for transmission of the discovery signal. The UE will also need to go RRC Connected if required (e.g. for type 2) to send the discovery signal. Once it has transmitted the discovery signal in a cell of the frequency, it will then prioritise the next D2D frequency it would want to hop to. This will go on as long as the discovery signal is still valid to be transmitted.

RRC Connected UE:
(3) If the TX UE is DL CA capable (but is simultaneously capable of cellular and 1 D2D transmit)
(3a) In the case of Type 1 and the TX pool is sent in the SIB and CA is not configured Like in the (1a) case, the UE is able to read the SIB of a non-serving ell of a D2D frequency which it needs to transmit discovery signal. The UE can then use the D2D transmission pool in the SIB of the cell for transmitting D2D discovery signals without the need to handover or be configured as an Scell (secondary cell), in other words the frequency hopping can be done autonomously by the UE
(4) In the case of Type land the TX Pool is sent in the SIB/ dedicated signalling or in the case of Type 2 and CA is configured
   If the UE is able to perform UL CA and D2D transmit at the same time on the same frequency, then there is no need for any further action as above.
   If the UE is not able to perform UL CA and D2D transmit at the same time on the same or different frequency, then there is a need for the UE to request the network to either release the UL Scell (with release cause) or move the Pcell (primary cell) to that frequency so that the UE can transmit the discovery signal. Once the UE has completed sending the discovery signal, the UE should inform the network of this so that the network knows that it can go back to network's cellular preference such as setup the UL Scell if required.
(5) If the TX UE is not DL CA capable, the UE should indicate the next D2D frequenc(ies) it wants to hop to in the network. With this information, the network may set up measurements based on the D2D frequencies indicated and try to handover the UE to a cell of the indicated frequency. It may inform the target network that the handover is due to D2D discovery so that it will provide a certain time for D2D discovery signal to be performed in that frequency. Alternatively, based on UE interest indication for discovery, or the UE requested release of the RRC connection, the network may release the connection for the UE to perform cell reselection to hop to the other D2D frequency.

If a UE (with a single receiver) needs to transmit and receive in different frequencies, then this could be left to UE implementation. However, it is likely that certain frequencies, and therefore probably particular applications of D2D, should take priority. So, for example, if a UE can be used for public safety then this application always takes priority, whether this is for receive or transmit, and therefore other D2D frequencies are deprioritised by the UE. If all D2D frequencies/ applications are equivalent, then it could be the UE transmitting takes precedence over receiving.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices maybe, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method of facilitating direct user equipment to user equipment transmission within a wireless communication network comprising a plurality of radio cells, said method being performed at a user equipment and comprising:
determining at said user equipment a plurality of resources provided by a plurality of said radio cells for transmission of a discovery signal by a user equipment indicating its presence;
during a user equipment discovery process, said user equipment switching between at least some of said plurality of resources such that user equipment in different radio cells can detect discovery signals from each other.

2. A method according to any preceding claim wherein said resource comprises at least one of a carrier frequency and a time period.

3. A method according to any preceding claim, wherein said user equipment has a single receiver and a single transmitter and when performing said switching between said resources, said user equipment is operable to autonomously prioritise a carrier frequency of said radio cell providing said resource.

4. A method according to any preceding claim, comprising prioritising said plurality of resources and switching between said plurality of resources until all of said resources above a predetermined priority have been switched to.

5. A method according to any preceding claim, further comprising repeating said switching step periodically.

6. A method according to any preceding claim, wherein said switching between resources comprises:
indicating to a radio cell that said user equipment is in communication with, an interest in at least one of said plurality of resources provided by a further radio cell; and
connecting to said further radio cell.

7. A method according to any preceding claim, wherein said information further comprises interest grouping information indicating resources used for discovery signals transmitted by user equipment providing direct communication corresponding to a service from a predetermined group of services.

8. A method according to any preceding claim, wherein said step of determining said plurality of resources comprises receiving at said user equipment from one of said radio cells in communication with said user equipment, information indicating at least one of said resources provided by a further radio cell.

9. A method according to claim 8, wherein said information is received in at least one of a system information block and a layer one control signal.

10. A method according to any preceding claim, wherein said determining step comprises:
receiving information from one of said plurality of radio cells, said information indicating at least one of:
a plurality of resources provided by said radio cell that are available for transmitting a discovery signal; and
an indication that said radio cell is of a type where said resources are provided to a connected user equipment on request.

11. A method according to any preceding claim, wherein said step of switching between at least some of said plurality of resources comprises:
transmitting said discovery signal on a resource provided by one of said plurality of radio cells; and
transmitting a discovery signal a resource provided by a further one of said plurality of radio cells.

12. A method performed at a network node supporting a radio cell within a wireless communication network comprising:
transmitting information towards user equipment within said radio cell, said information comprising information indicating at least one resource provided by at least one further radio cell for transmission of a discovery signal by a user equipment indicating its presence.

13. A computer program operable when executed by a computer to control said computer to perform a method according to any one of claims 1 to 12.

14. A user equipment configured to perform direct user equipment to user equipment communication within a wireless communication network comprising a plurality of radio cells, said user equipment comprising:
determining logic for determining a plurality of resources provided by a plurality of said radio cells for transmission of a discovery signal by a user equipment indicating its presence;
resource switching logic for switching between at least some of said plurality of resources during a user equipment discovery process such that user equipment in different radio cells can detect discovery signals from each other.

15. A network node supporting a radio cell within a wireless communication network comprising:
transmission logic operable to transmit information towards user equipment within said radio cell, said information comprising information indicating at least one resource provided by at least one further radio cell for transmission of a discovery signal by a user equipment indicating its presence.
